# EUROPÄISCHE PATENTANMELDUNG

(11) **EP 0 847 909 A1**
(43) Veröffentlichungstag der Anmeldung: **17.06.1998**
(21) Anmeldenummer: 97115247.5
(22) Anmeldetag: 03.09.1997
(51) Int. Cl.: B62B 3/18

(54) **Stapelbarer Transportwagen**

(30) Priorität: 14.12.1996 DE 29621725 U
(71) Anmelder: Michalski, Heinz, 91241 Kirchensittenbach (DE)
(72) Erfinder: Michalski, Heinz, 91241 Kirchensittenbach (DE)
(74) Vertreter: Hafner, Dieter, Dr.rer.nat., Dipl.-Phys.

(57) **Zusammenfassung**

Stapelbarer Transportwagen für Behälter, Wannen, Paletten und dgl. mit einem Unterteil (2) mit daran befestigten Rädern (3) und im Bedarfsfalle auf dem Unterteil befestigbaren, von diesem im wesentlichen vertikal nach oben abstehenden und sich im wesentlichen parallel gegenüberliegenden Seitenwandelementen (4a,4b), wobei das Unterteil aus zwei balkenartigen Seitenteilen (5,6) und einem zwischen diesen verlaufenden leistenartigen Verbindungselement (7) besteht und das vordere Ende des einen Seitenteils mit dem hinteren Ende des anderen Seitenteils derart verbindet, daß das Unterteil in Draufsicht die Form eines seitenrichtigen oder seitenverkehrten 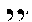 Z" aufweist.

## Beschreibung

Die Neuerung betrifft einen stapelbaren Transportwagen mit den weiteren Merkmalen des Oberbegriffs des Schutzanspruchs 1.

Derartige Transportwagen dienen insbesondere der Aufbewahrung und dem Transport von Waren, z.B. in einem Lager oder einem Supermarkt, und bestehen in, wesentlichen aus einen meist viereckigen Boden und mindestens zwei gegenüberliegenden, meist gitterartigen Seitenwandelementen, die auf dem Unterteil befestigbar sind. Ferner sind unterhalb des Bodens an den Ecken Räder montiert. Der Boden besteht üblicherweise aus parallel angeordneten Holzbrettern, welche mit ihren Enden an jeweils senkrecht dazuliegenden Holzbrettern befestigbar sind oder aus einem Metallgitter. Um zusätzliche Auflageflächen für die zu transportierenden Waren zu schaffen, können an den Seitengittern Zwischenböden in bestimmten Höhenlagen befestigt werden.

Diese Transportwagen stellen sich zwar als stabile, aber auch als äußerst sperrige Transpottmittel dar, die im Falle der Niehtbenutzung viel Stauraum in Anspruch nehmen.

Aus DE 27 40 818 C2 ist eine stapelbare Last- oder Rollpalette bekannt, bei der die Seitenwandelemente an ihrem unteren Ende mit einem horizontalen Balken verbunden sind und somit von oben gesehen einen U-fömigen Rahmen bilden. der Boden ist zwischen den Seitenwandelementen in Richtung des horizontalen Balkens hochklappbar, wobei mittels Führungseinrichtungen die Seitenwandelemente automatisch um einen bestimmten Betrag ausschwenbar sind. In den so umgewandelten Transportwagen kann ein anderer Transportwagen eingeschoben werden. Für diesen gleichzeitigen Hochklapp- und Ausschwenkmechanismus sind komplizierte Führungseinrichtungen vorgesehen, zu deren Funktion viele Einzelteile erforderlich sind. Diese Einzelteile müssen teilweise so präzise hergestellt sein, damit sie formschlüssig zusammenwirken. Das Verfahren nach dem Stand der Technik ist insofern nicht unproblematisch, als z.B. nur ein fehlerhaftes Teil die komplette Führungseinrichtung funktionsunfähig macht und dadurch ein Ausschwenken der Seitenwandelemente nicht mehr möglich ist. Ferner stellt eine derart komplizierte Führungseinrichtung einen entsprechend hohen Kostenfaktor im Vergleich zum gesamten Transportwagen dar.

Der Neuerung liegt die Aufgabe zugrunde, einen stapelbaren Transportwagen mit den Merkmalen des Oberbegriffs des Anspruchs 1 derart weiterzubilden, daß er auf einfache Weise stapelbar ist, kostengünstig hergestellt werden kann, eine hohe Stabilität gewährleistet und gleichzeitig von zwei Seiten ineinanderschiebbar ist.

Diese Aufgabe wird durch die kennzeichnenden Merkmale des Anspruchs 1 gelöst. Vorteilhafte Weiterbildungen des neuerungsgemäßen stapelbaren Transportwagens ergeben sich aus den Unteransprüchen 2-11.

Als Kern der Neuerung wird es angesehen, dem Unterteil des Transportwagens in Draufsicht die Form eines seitenrichtigen oder seitenverkehrten 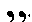 Z" zu geben, bei dem ein leistenartiges Verbindungselement das vordere Ende des einen Seitenteils mit dein hinteren Ende des anderen Seitenteils verbindet. Dadurch wird mit Vorteil erreicht, daß die Z-förmigen Unterteile so ineinander geschoben werden können, daß zwei ineinandergeschobene Unterteile mit geringem Versatz in der Breite und Länge des jeweiligen Seitenteils aneinanderliegen. Außerdem ermöglicht diese Konstruktion ein Einschieben der Unterteile bzw. Transportwagen von zwei gegenüberliegenden Seiten.

Falls die genannten Z-förmigen Unteileile keine ausreichende Auflagefläche für die zu transportierenden Behälter bzw. Waren bieten, kann gegebenenfalls ein Klappboden vorgesehen werden, der auf dem Unterteil aufliegt. Dieser Klappboden kann an einem Seitenteil des Unterteils scharnierbefestigt werden und an einem Seitenwandelement hochklappbar und dort befestigbar sein, indem er beispielsweise mit einem Haken an einem horizontalen Gitterstab des gitterartigen Seitenwandelements einhängbar ist. Falls kein Seitenwandelement auf dein Unterteil befestigt ist, kann alternativ das Scharnier zwischen Klappboden und Unterteil mit einer Sperrvorrichtung versehen sein, uni den Klappboden in hochgeklappter Stellung zu halten.

Nachdem sich der Klappboden in der hochgeklappten Stellung befindet, ist das Unterteil wieder aufnahmefähig für andere Transportwagen. Der Klappboden kann beispielsweise aus einem viereckigen Rahmen mit einem oder mehreren Querbalken aufgebaut sein.

Damit die auf den, Transportwagen gestapelten Waren nicht ins Schwanken geraten, sind Zwischenböden vorgesehen, die in definierten Höhenlagen über dem Klappboden zwischen den Seitenwandelementen anbringbar sind.

Diese Zwischenböden können beispielsweise in das gitterartige Seitenwandelement einhängbar und auf diese Art bei Gebrauch wieder leicht entfernbar sein. Für ein ungehindertes Stapeln der Transportwagen sind diese Zwischenböden entweder komplett herauszunehmen oder einfach an einem Seitenwandelement herunterzuklappen, indem sie an dem gegenüberliegenden Seitenwandelement ausgehängt werden. Die Zwischenböden können aber auch wie der Klappboden an einem Seitenwandelement hochgeklappt und dort verriegelt werden.

Um einen zusätzlichen Transportschutz zu erzielen, sind noch weitere Wandelemente zwischen den Seitenwandelementen anbringbar. So kann der Transportwagen z.B. durch eine Hinterwand, eine Frontwand oder auch durch eine zweiflüglige Tür ergänzt werden. Diese zusätzlichen Wandelemente können in Vertikalrichtung scharnierartig an den Kanten der Seitenwandelemente befestigt werden, so daß diese Wandelemente flach an die Seitenwandelemente anklappbar und dort gegebenenfalls verriegelbar sind. So ist ein Ineinanderschieben der Transportwagen bei nach innen oder nach außen geklapptem Zustand der zusätzlichen Wandelemente weiterhin möglich. Ist gleichzeitig eine Hinterwand und eine Vorderwand vorgesehen, so kann beispielsweise die Hinterwand außen an das erste Seitenwandelement und die Vorderwand innen an das zweiten Seitenwandelement anklappbar sein. Ebenso können aber auch beide zusätzlichen Wandelemente nach außen bzw. nach innen einklappbar sein.

Als zusätzlicher Vorteil für die Stapelfunktion zeigt sich die Gestaltung der Stirnenden der Seitenteile, die derart abgeschrägt sind, daß die Stirnenden gleichebig in die Seitenfläche des Verbindungselements übergehen. Dieser abgeschrägte Rand paßt sich dem Verbindungselement des eingeschobenen Transportwagens so an, daß der Versatz in Breite und Länge der Seitenteile minimiert wird und eine noch bessere Platzersparnis gegeben ist. Außerdem stellen die abgeschrägten Enden für das anliegende Verbindungselement eine für beide Seiten schonende Kontaktfläche dar.

Die Seitenteile und/oder das Verbindungselement bestehen aus Vierkantrohren oder -profilen, die ein sicheres und einfaches Zusammenfügen des Unterteils ermöglichen. Außerdem sind auf dem Vierkantprofil der Seitenteile Durchgangsbohrungen leicht anbringbar, die der Aufnahme der Seitenwandelenmente dienen. Aufgrund der Vierkantfromen sind beispielsweise auch Eckbeschläge an den Enden der Seitenteile montierbar, die gleichzeitig zur Aufnahme der Seitenwandelemente und als Gegenschraubplatte zur Rädermontage dienen.

Die Seitenwandelemente können auch direkt auf dem Unterteil eingesteckt werden, indem beispielsweise Durchgangsbohrungen für die Aufnahme der vertikalen Stäbe des gitterartigen Seitenwandelements angebracht sind.

Die Neuerung ist anhand eines vorteilhaften Ausführungsbeispiels in den Zeichnungsfiguren näher erläutert. Diese zeigen:
- Fig. 1: eine perspektivische Darstellung des neuerungsgemäßen Transportwagens;
- Fig. 2: eine perspektivische Darstellung von mehreren ineinander gesehobenen Transportwagen sowie
- Fig. 3: einen Draufsicht gestapelter Unterteile.

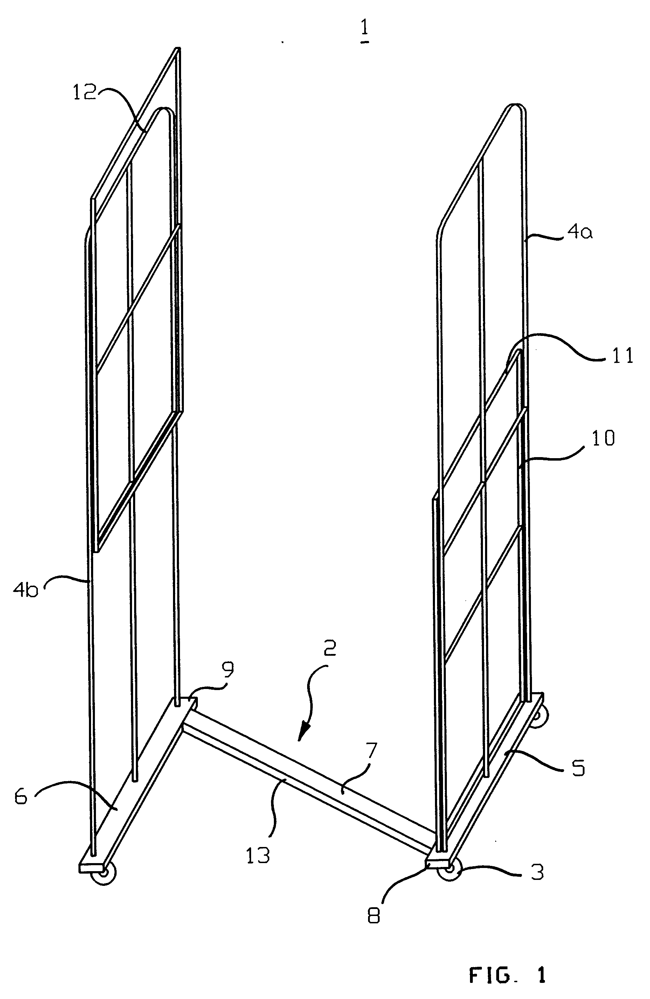

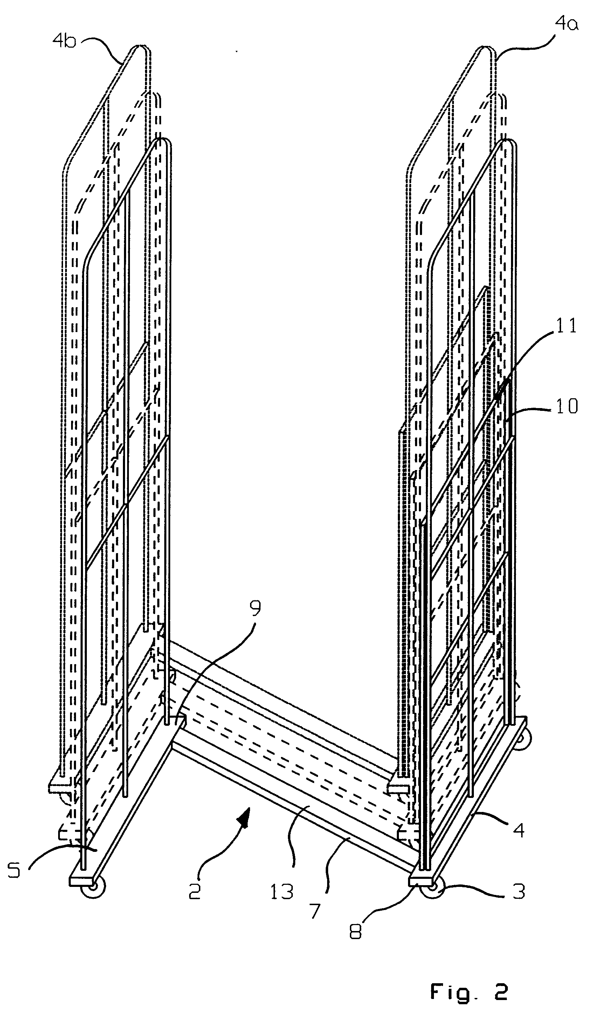

Fig. 1 zeigt den stapelbaren neuerungsgemäßen Transportwagen 1 mit zwei gegenüberliegenden und zueinander parallelen Seitenwandelementen 4a, 4b. Die Seitenwandelemente 4a, 4b sind vertikal auf einem Z-förmigen Unterteil 2 befestigt. Das Unterteil 2 besteht aus zwei balkenartigen Seitenteilen 5, 6 und einem zwischen diesen verlaufenden leistenartigen Verbindungselement 7, das das vordere Ende 8 des einen Seitenteils 5 mit dem hinteren Ende 9 des anderen Seitenteils 6 verbindet. Diese Konstruktion führt zu dem dargestellten Z-förmigen Unterteil 2. Ebenso ist es möglich, das Unterteil 2 als seitenverkehrtes 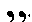 Z" auszubilden. Aufgrund dieser Z-Form ist das Unterteil 2 aufnahmefähig für andere Z-förmige Unterteile 2 bzw. Transportwagen 1, die in der in Fig. 2 dargestellten Art und Weise eingeschoben werden können.

Ferner befinden sich an den äußeren Enden 8, 9 der jeweiligen Seitenteile 5, 6 Räder zum einfachen Fortbewegen des Transportwagens 1. Die Seitenwandelemente 4a, 4b sind beispielsweise mit ihrem vertikalen Stäben in Ausnehmungen der Seitenteile 5, 6 eingesteckt.

Ein Klappboden 10 ist an einem Seitenteil 5 oder 6 scharnierartig befestigt und - wie in Fig. 1 und 2 dargestellt - an ein Seitenwandelement 4a hochgeklappt. In dieser hochgeklappten Position ist der Klappboden 10 beispielsweise an seiner freien Kante 11 mit einem Haken an einem horizontalen Gitterstab einhängbar. In der abgekappten Stellung liegt der Klappboden 10 mit seiner freien Kante 11 auf dem anderen Seitenteil 6 auf, so daß dieser eine sichere Standfläche für die zu transportierenden Waren darstellt. Wird das Unterteil 2 durch den Hochklappmechanismus des Klappbodens 10 wieder freigelegt, können andere Transportwagen 1 in das nun wieder aufnahmefähige Z-förmige Unterteil 2 eingeschoben werden.

Ferner besteht die Möglichkeit, mindestens einen Zwischenboden 12 in einer bestimmten Höhe über dem Klappboden 10 zwischen den Seitenwandelementen 4a, 4b, vorzugsweise an zwei sich gegenüberliegenden horizontalen Gitterstäben einzuhängen. Zum Stapeln des Transportwagens 1 kann der Zwischenboden 12 auf einem Seitenwandelement 4a oder 4b aufgehängt und vertikal nach unten geklappt werden. Alternativ kann der Zwischenboden 12 auch an einem Seitenwandelement 4a oder 4b hochgeklappt und in oder hochgeklappten Position mit dem Seitenwandelement 4a oder 4b verriegelt werden. An den noch freien Seiten können zwischen den Seitenwandelementen 4a, 4b in den Zeichnungsfiguren nicht dargestellte weitere Wandelemente angebracht werden. Beispielsweise stellen eine Hinter- und/oder Vorderwand einen zusätzlichen Transportschutz für die auf dem Transportwagen 1 gestapelten Behälter oder Waren dar.

Es ist vorgesehen, daß diese weiteren Seitenwandelemente 4a, 4b in Vertikalrichtung scharnierartig an den Seitenwandelementen 4a oder 4b befestigt sind, so daß sie flach an die Seitenwandelemente 4a oder 4b anklappbar und dort gegebenenfalls verriegelbar sind.

Die Seitenteile 5, 6 und das Verbindungselement 7 besteht aus Vierkantrohren oder -profilen, wodurch ein einfaches Zusammenfügen der jeweiligen teile gewährleistet ist. Auch die Seitenwandelemente 4a, 4b können sicher und stabil auf den, Vierkantmaterial befestigt, beispielsweise auch aufgesteckt werden.

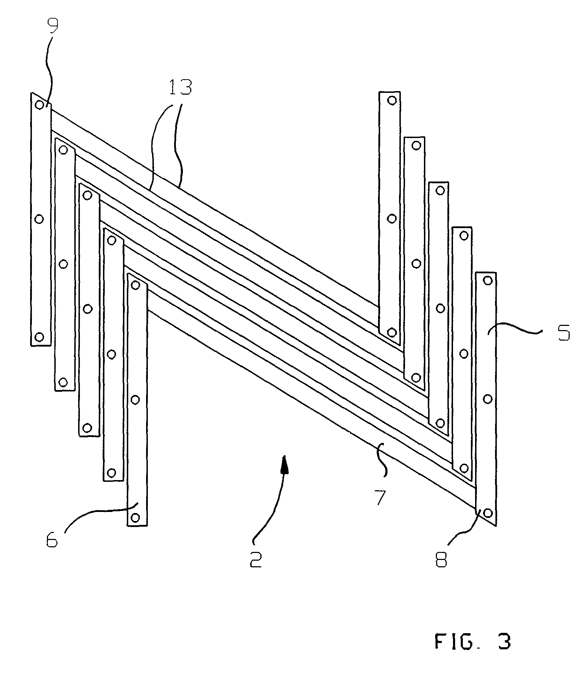

Fig. 3 verdeutlicht Ausgestaltungen des Unterteils 2, die das Stapeln der Z-förmigen Unterteile 2 noch optimieren. Die Darstellung zeigt, daß die mit dem Verbindungselement 7 verbundenen Stirnenden 8, 9 der Seitenteile 5, 6 derart abgeschrägt sind, daß die Stirnenden 13, 14 gleichebig in die Seitenfläche 15 des Verbindungselements 7 übergeht. Das jeweils eingeschobene Unterteil 2 paßt sich mit seinem Verbindungselement 7 dem abgeschrägten Ende 8 bzw. 9 so an, daß ein minimaler Versatz bei gleichzeitig maximaler Stapeldichte gegeben ist.

Ferner zeigt Fig. 3, daß die Bohrungen für die Aufnahme der Seitenwandelemente 4a, 4b sich äußeren Rand der Seitenteile 5 bzw. 6 befinden. Diese Anordnung hat den Vorteil, daß auf dem Seitenteil 5 bzw. 6 noch ausreichend Platz für ein scharnierartiges und stabiles Anbringen des Klappbodens 10 ist. Außerdem ragt der Klappboden 10 im hochgeklappten Zustand nicht über den inneren Rand des Seitenteils 5 bzw. 6 hinaus. Der hochgeklappte Klappboden 10 bewirkt also keine zusätzlichen Versatz in Längsrichtung des Unterteils 2 beim Stapeln des Transportwagens 1.

### BEZUGSZEICHEN

- 1: Transportwagen
- 2: Unterteil
- 3: Rad
- 4a: Seitenwandelement
- 4b: Seitenwandelement
- 5: Seitenteil
- 6: Seitenteil
- 7: Verbindungselement
- 8: vorderes Ende
- 9: hinteres Ende
- 10: Klappboden
- 11: freie Kante
- 12: Zwischenboden
- 13: Stirnende
- 14: Stirnende
- 15: Seitenfläche

## Patentansprüche

1. Stapelbarer Transportwagen (1) für Behälter, Wannen, Paletten und dgl. mit
- einem Unterteil (2) mit daran befestigten Rädern (3) und
- im Bedarfsfalle auf dem Unterteil (2) befestigbaren, von diesem im wesentlichen vertikal nach oben abstehenden und sich im wesentlichen parallel gegenüberliegenden Seitenwandelementen (4),
**dadurch gekennzeichnet, daß**
das Unterteil (2) aus zwei balkenartigen Seitenteilen (5, 6) und einem zwischen diesen verlaufenden leistenartigen Verbindungselement (7) besteht, das das vordere Ende (8) des einen Seitenteils (5 oder 6) mit dem hinteren Ende (9) des anderen Seitenteils (6 oder 5) derart verbindet, daß das Unterteil (2) in Draufsicht die Form eines seitenrichtigen oder seitenverkehrten 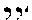 Z" aufweist.

2. Stapelbarer Transportwagen nach Anspruch 1,
**dadurch gekennzeichnet, daß**
auf einem Seitenteil (5 oder 6) ein Klappboden (10) scharnierbefestigt ist, der in abgeklappter Stellung mit seiner freien Kante (11) auf dem anderen Seitenteil (6 oder 5) aufliegt.

3. Stapelbarer Transportwagen nach einem der vorhergehenden Ansprüche 1 oder 2,
**dadurch gekennzeichnet, daß**
Zwischenböden (12) vorgesehen sind, die in definierten Höhenlagen über dem Klappboden (10) zwischen den Seitenwandelementen (4a, 4b) anbringbar, insbesondere einhängbar sind.

4. Stapelbarer Transportwagen nach einem der vorhergehenden Ansprüche 1 - 3,
**dadurch gekennzeichnet, daß**
die Zwischenböden (12) an den Seitenwandelementen (4a oder 4b) in der hochgeklappten Position befestigbar, insbesondere verriegelbar sind.

5. Stapelbarer Transportwagen nach einem der vorhergehenden Ansprüche 1-4
**dadurch gekennzeichnet, daß**
zwischen den Seitenwandelementen (4a, 4b) mindestens ein weiteres Wandelement (Hinterwand, Frontwand) befestigbar ist.

6. Stapelbarer Transportwagen nach einem der vorhergehenden Ansprüche,
**dadurch gekennzeichnet, daß**
die weiteren Wandelemente in Vertikalrichtung scharnierartig an den Seitenwandelementen (4a und/oder 4b) befestigbar sind.

7. Stapelbarer Transportwagen nach einem der vorhergehenden Ansprüche,
**dadurch gekennzeichnet, daß**
die weiteren Wandelemente flach an die Seitenwandelemente (4a, 4b) anklappbar und dort gegebenenfalls verriegelbar sind.

8. Stapelbarer Transportwagen nach einem der vorhergehenden Ansprüche,
**dadurch gekennzeichnet, daß**
eines der weiteren Wandelemente außen an das erste Seitenwandelement (4a oder 4b) und das andere innen an das zweite Seitenwandelement (4b oder 4a) anklappbar ist.

9. Stapelbarer Transportwagen nach einem der vorhergehenden Ansprüche,
**dadurch gekennzeichnet, daß**
die mit dem Verbindungselement (7) verbundenen vorderen (8) und hinteren Ende (9) (Stirnenden) der Seitenteile (5, 6) derart abgeschrägt sind, daß die Stirnenden (8, 9) gleichebig in die Seitenflächen (15) des Verbindungselements (7) übergehen.

10. Stapelbarer Transportwagen nach einem der vorhergehenden Ansprüche,
**dadurch gekennzeichnet, daß**
die Seitenteile (5, 6) und/oder das Verbindungselement (7) aus Vierkantrohren oder -profilen bestehen.

11. Stapelbarer Transportwagen nach einem der vorhergehenden Ansprüche,
**dadurch gekennzeichnet, daß**
die Seitenwandelemente (4a, 4b) steckbar auf dem Unterteil (2) befestigbar sind.
